# EUROPÄISCHE PATENTSCHRIFT

(11) **EP 3 368 196 B1**
(45) Veröffentlichungstag und Bekanntmachung des Hinweises auf die Patenterteilung: **28.08.2019**
(21) Anmeldenummer: 16781800.4
(22) Anmeldetag: 14.10.2016
(51) Int. Cl.: B01D 63/16, C02F 1/44

(54) **ROTATIONSFILTERANORDNUNG MIT MEHREREN HOHLWELLEN**
ROTARY FILTER ARRANGEMENT HAVING A PLURALITY OF HOLLOW SHAFTS
ENSEMBLE FILTRE TOURNANT DOTÉ DE PLUSIEURS ARBRES CREUX

(30) Priorität: 27.10.2015 DE 102015118275
(43) Veröffentlichungstag der Anmeldung: 05.09.2018
(73) Patentinhaber: GEA Mechanical Equipment GmbH, 59302 Oelde (DE)
(72) Erfinder: GRÖNE, Verena, 59320 Ennigerloh (DE)
(74) Vertreter: Specht, Peter
(86) Internationale Anmeldenummer: PCT/EP2016/074725
(87) Internationale Veröffentlichungsnummer: WO 2017/071975

(56) Entgegenhaltungen:
- EP-A1- 1 323 458
- WO-A1-2011/033537
- WO-A2-02/05935
- JP-A- S6 297 604
- JP-A- 54 071 773
- US-A- 3 997 447
- US-A- 4 925 557
- US-A1- 2011 011 785

## Beschreibung

Die Erfindung betrifft eine Filtrieranordnung nach dem Oberbegriff des Anspruchs 1
Eine Filtrieranordnung für eine Filtriervorrichtung, wobei die Filtriervorrichtung einen Behälter aufweist und wobei die Filtrieranordnung wenigstens zwei oder mehrere in einem Maschinengestell drehbar gelagerte Hohlwellen aufweisen, auf denen jeweils eine Mehrzahl von Membranfilterscheiben angeordnet ist, wobei den zwei oder den mehreren Hohlwellen wenigstens eine Antriebsvorrichtung zugeordnet ist und wobei die Ableitung von Permeat aus dem Behälter durch die Hohlwellen erfolgt bzw. realisierbar ist, und wobei jede Hohlwelle an einem ihrer Enden mit der Mehrzahl von Membranfilterscheiben in den Behälter einsetzbar ist, so dass die Hohlwellen an ihrem entgegengesetzten Ende aus dem Behälter nach außen vorstehen, ist aus der DE 10 2009 010 484 bekannt.

Zum Stand der Technik sei ferner die DE 20 2005 018 806 A genannt. Zum Stand der Technik seien ferner die die DE 695 11 772 T2 und die gattungsgemäße WO 02/ 005 935 A2 genannt. Die letztgenannte Schrift zeigt einen Rotationsfilter, bei dem zum Abpumpen von Permat aus einem Behälter eine Pumpe erforderlich ist.

Eine gattungsgemäße Filtrieranordnung ist ferner aus der WO02/05935 A2 bekannt.

Es ist die Aufgabe der Erfindung, die gattungsgemäßen Filtrieranordnung hinsichtlich eines konstruktiv einfachen sowie zuverlässigen Aufbaus weiterzubilden.

Die Erfindung löst diese Aufgabe durch den Gegenstand des Anspruchs 1.

Anspruch 16 schafft eine Filtriervorrichtung mit einer oder mehreren solchen Filtrieranordnungen und mit einem Behälter.

Nach dem Anspruch 1 ist u.a. vorgesehen, dass auf jeder Hohlwelle jeweils mehrere oder viele der Membranfilterscheiben axial beabstandet angeordnet sind, und dass zwischen einem Teil oder sämtlichen benachbarten Membranfilterscheiben Distanzhülsen angeordnet sind, welche die Membranfilterscheiben auf den Hohlwellen axial zueinander beabstanden. Diese Ausgestaltung ermöglicht ein sehr einfaches Anordnen der Membranfilterscheiben auf den Hohlwellen.

Sodann ist nach dem Kennzeichen des Anspruchs 1 weiter vorgesehen, dass die Hohlwellen einen mehreckigen Außenquerschnitt ausbilden, wobei jeweils über die axiale Länge, auf welcher die Anordnungen aus axial gestapelten Membranfilterscheiben und den Distanzhülsen angeordnet sind, die Hohlwellen außen regelmäßig mehreckig ausgebildet sind, wobei die Distanzhülse und die Membranfilterscheiben innen kreisrund sind und wobei nahezu linienförmige Anlagebereiche im Bereich der Ecken zwischen dem Außenumfang der Hohlwellen und dem Innenumfang der Distanzhülsen und der Membranfilterscheiben ausgebildet sind, wobei zwischen benachbarten Anlagebereichen die Axialkanäle verlaufen. Es ist ferner vorzugsweise vorgesehen, dass eine Vorspannung - auf die Distanzhülsen - derart gewählt ist, dass sich die Distanzhülsen so verformen, dass ihr Innenumfang im Bereich der Ecken bzw. der größten Außendurchmesser an den Außenumfang der nicht kreisrunden Hohlwellen gedrückt wird, so dass die Anordnung aus axial gestapelten Membranfilterscheiben - auf besonders konstruktiv einfache und vorteilhaft zuverlässige - Weise drehsicher auf den Hohlwellen festgespannt ist.

Besonders vorteilhaft kann damit eine einstückige Distanzhülse eingesetzt werden anstelle einer Hülse, die als Verbund aus mehreren Teilen ausgestaltet ist.

Nach einer besonders vorteilhaften Variante der Erfindung ist vorgesehen, dass die Distanzringe aus einem verformbaren, insbesondere vorzugsweise aus einem elastisch verformbaren Material bestehen. Bevorzugt wird dabei weiter, dass die Distanzringe aus einem zähelastischen Material bestehen. Denn derart kann in der Einbaustellung an den Hohlwellen eine leichte Verformung der Distanzhülsen vorteilhaft dazu genutzt werden, die Membranfilterscheiben auf den Hohlwellen drehfest anzuordnen. Dazu ist es ergänzend weiter vorteilhaft, wenn die Hohlwellen einen nicht kreisrunden, insbesondere einen eckigen Außenquerschnitt ausbilden. Die Distanzringe können eine gleiche axiale Dicke aufweisen oder ggf. auch jedenfalls in Abständen eine unterschiedliche Dicke, um ggf. derart Toleranzen an den Membranfilterscheiben auszugleichen. Dies erspart ggf. ein Nach- oder Anschleifen der Membranfilterscheiben, um diese auf eine sehr gleichmäßige Dicke zu bringen.

Dabei ist es weiter vorteilhaft, wenn die Hohlwellen parallel zueinander ausgerichtet sind und dass sie derart beabstandet sind und dass die Membranfilterscheiben so axial auf ihnen angeordnet sind, dass sich die Membranfilterscheiben auf den Hohlwellen radial überlappen. Denn auf diese Weise werden auf einfache Weise vorteilhafte Strömungsverhältnisse im Behälter zur Membranfiltration erzeugt.

Es ist weiter konstruktiv einfach und vorteilhaft, wenn die Membranfilterscheiben jeweils sich radial erstreckende Permeatkanäle und/oder einen Ringspalt aufweisen, der/die radial nach innen offen ausgebildet ist/sind und wenn die Permeatkanäle und/oder der Ringspalt bzw. die Ringspalte nach innen zu den Hohlwelle hin in jeweils mindestens einen axial verlaufenden Axialkanal am Außenumfang der jeweiligen Hohlwellen münden.

Dabei ist zudem bevorzugt, dass sich die Axialkanäle jeweils über den gesamten oder jedenfalls größten Teil des axialen Abschnittes der Hohlwellen erstrecken, der innerhalb des Behälters anordbar ist, um möglichst viele der Membranfilterscheiben in diesem Bereich anordnen zu können.

Nach einer anderen bevorzugten Ausgestaltung, welche die Art der Ableitung des Permeats von den Membranfilterscheiben vorteilhaft weiterbildet, können die Axialkanäle jeweils mit einer oder mehreren axial beabstandeten, sich radial erstreckenden Bohrungen versehen sein, die in einen Längskanal innerhalb der jeweiligen Hohlwellen münden. Dabei ist es zudem bevorzugt, wenn sich der Längskanal jeweils vorzugsweise über die gesamte Länge der Hohlwellen erstreckt und abschnittsweise innerhalb des Behälters und abschnittsweise außerhalb des Behälters anordbar ist bzw. angeordnet wird.

Es ist weiter konstruktiv einfach und sicher, wenn die Hohlwellen eine Durchmesservergrößerung, insbesondere einen Bund oder einen Hülsenaufsatz aufweisen und derart in einer ersten Richtung axial die Axialkanäle verschließen. Dabei ist es weiter vorteilhaft, wenn an den im Behälter anordbaren Enden der Hohlwellen jeweils eine Abdeckungseinrichtung vorgesehen ist, die den oder die Axialkanäle in dieser Richtung verschließen.

Nach einer Weiterbildung, die bevorzugt wird und sehr vorteilhaft ist, ist vorgesehen, dass der Abstand der nichtrunden Bereiche, insbesondere Ecken, der Hohlwellen und der Innenradius der Distanzhülsen und der Membranfilterscheiben derart gewählt und abgestimmt ist, dass die Distanzhülsen und die Membranfilterscheiben, bei der Montage zunächst mit Spielpassung auf den Ecken der Hohlwellen aufsetzbar sind, so dass in einem Endmontagezustand die nahezu linienförmigen Anlagebereiche im Bereich der Ecken zwischen dem Außenumfang der Hohlwellen und dem Innenumfang der Distanzhülsen und der Membranfilterscheiben ausgebildet werden, wobei zwischen benachbarten Anlagebereichen die Axialkanäle verlaufen.

Nach einer weiteren konstruktiven Weiterbildung ist vorgesehen, dass die Abdeckeinrichtungen axial über eine Feder - insbesondere eine oder mehrere Tellerfedern - auf die jeweilige Anordnung aus axial gestapelten Membranfilterscheiben und den Distanzhülsen mit einer bzw. der Vorspannkraft wirken. Vorzugsweise ist diese Vorspannung vorteilhaft derart gewählt, dass sich die Distanzhülsen leicht so verformen, dass ihr Innenumfang im Bereich der Ecken bzw. der größten Außendurchmesser an den Außenumfang der nicht kreisrunden Hohlwellen gedrückt wird, so dass die Anordnung aus axial gestapelten Membranfilterscheiben und den Distanzhülsen drehsicher auf den Hohlwellen festgespannt ist. Durch die vorzugsweise zähelastischen Distanzringe lässt sich die Spannkraft sehr gleichmäßig und schonend auf die Membranfilterscheiben übertragen, die in der Regel ungeschliffen und eher rauh ausgebildet sind.

Nach einer anderen Weiterbildung ist vorgesehen, dass an dem aus dem Behälter vorstehenden Ende jeder drehbaren Hohlwelle eine drehbare Pumpscheibe angeordnet oder ausgebildet ist, die einen Teil einer Zentrifugalpumpenanordnung zum Pumpen von Permeat bildet. Derart wird auf einfache Weise ein Abpumpen von Permeat aus dem Behälter durch Membranfilterscheiben und die Hohlwellen bis in eine Ableitung realisierbar. Eine den konstruktiven Aufwand erhöhende separate Pumpe wie beispielsweise eine Vakuumpumpe ist nicht erforderlich. Die Antriebsvorrichtung zum Drehen der Hohlwellen mit den Membranfilterscheiben treibt vielmehr auch die Zentrifugalpumpe mit an.

Es ist zweckmäßig und konstruktiv besonders einfach, wenn an den jeweils außerhalb des Behälters anordbaren Enden der Hohlwellen wenigstens zwei oder sogar sämtliche der Pumpscheiben in einem gemeinsamen Ableitungsbehälter angeordnet sind. Dabei ist es vorteilhaft, wenn der Ableitungsbehälter eine Ableitung aufweist und ansonsten abgedichtet ausgebildet und an das Maschinengestell angesetzt ist.

Es ist vorteilhaft, wenn nach einer Weiterbildung die Hohlwellen außerhalb des Behälters drehbar in einem Maschinengehäuse - welches das Maschinengestell bildet - gelagert sind. Ein Maschinengehäuse ist vorteilhaft, da es einfach und in stabiler Ausgestaltung insbesondere als Metallgußteil ausgebildet ist.

Es ist vorteilhaft, wenn das Maschinengehäuse einen Außenmantel aufweist und einen oder mehrere Radialbünde, die sich vom Außenmantel radial nach innen erstrecken und dass einer oder zwei dieser Radialbünde dazu dienen, die Hohlwellen jeweils mit Lagereinrichtungen, insbesondere mit zwei axial beabstandeten Wälzlagern, drehbar im Maschinengehäuse zu lagern. Dies trägt zu einer stabilen und kompakten Ausgestaltung bei.

Dabei kann das Maschinengehäuse zumindest einen Antriebsmotor, eine Antriebsverbindung zu den Hohlwellen, vorzugsweise einen Umschlingungsriementrieb, und Lagereinrichtungen aufnehmen bzw. einfassend umgeben, so dass diese Komponenten gut geschützt liegen.

Nachfolgend wird die Erfindung unter Bezug auf die Zeichnung anhand von Ausführungsbeispielen näher beschrieben. Es zeigt:
- Fig. 1: in a) eine geschnittene Darstellung einer erfindungsgemäßen Filtrieranordnung für eine Filtriervorrichtung, in b) eine Ausschnittsvergrößerung aus a), in c) einen Schnitt senkrecht zu a) längs der Linie A-A und in d) einen Schnitt senkrecht zu a) längs der Linie B-B;
- Fig. 2: in a) einen zu Fig. 1 senkrecht orientierten Schnitt eines Teilbereichs einer Filtrieranordnung nach Art der Fig. 1 mit einer in diesem Schnitt sichtbaren Antriebsvorrichtung, in b) eine Ausschnittsvergrößerung aus a) und in c) einen Schnitt senkrecht zu a) längs der Linie C-C.

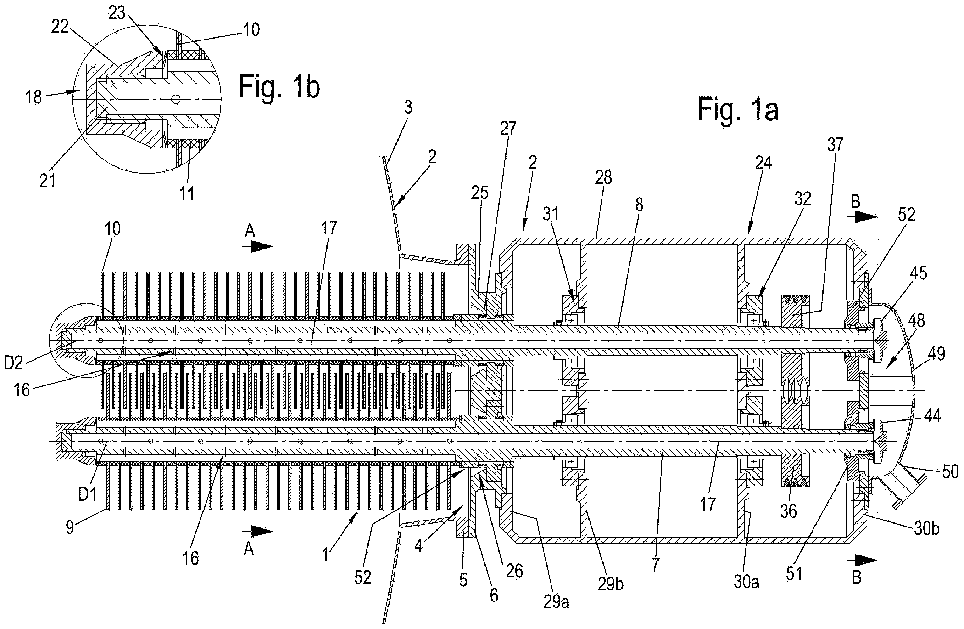

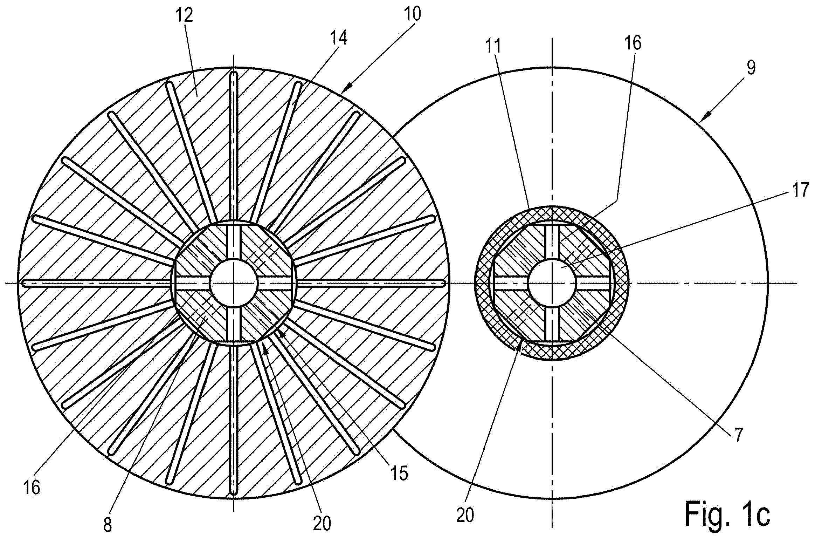

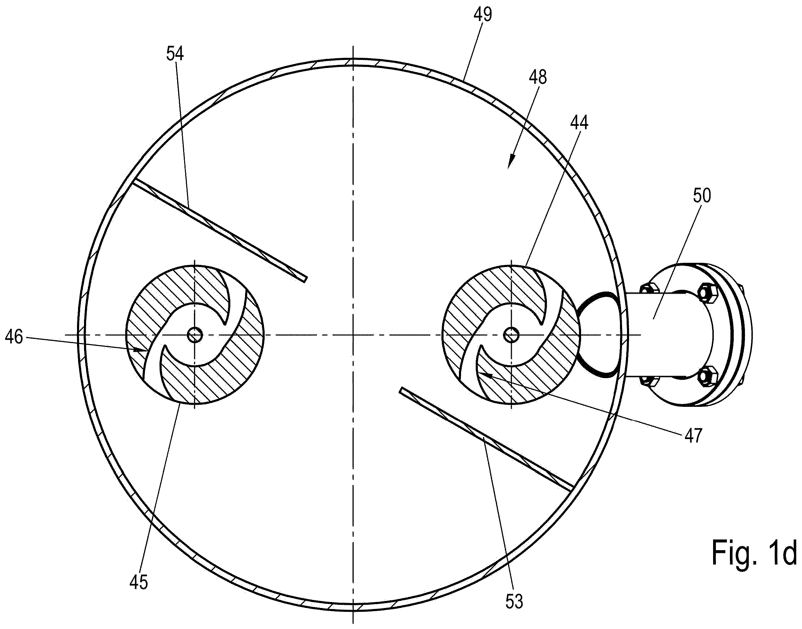

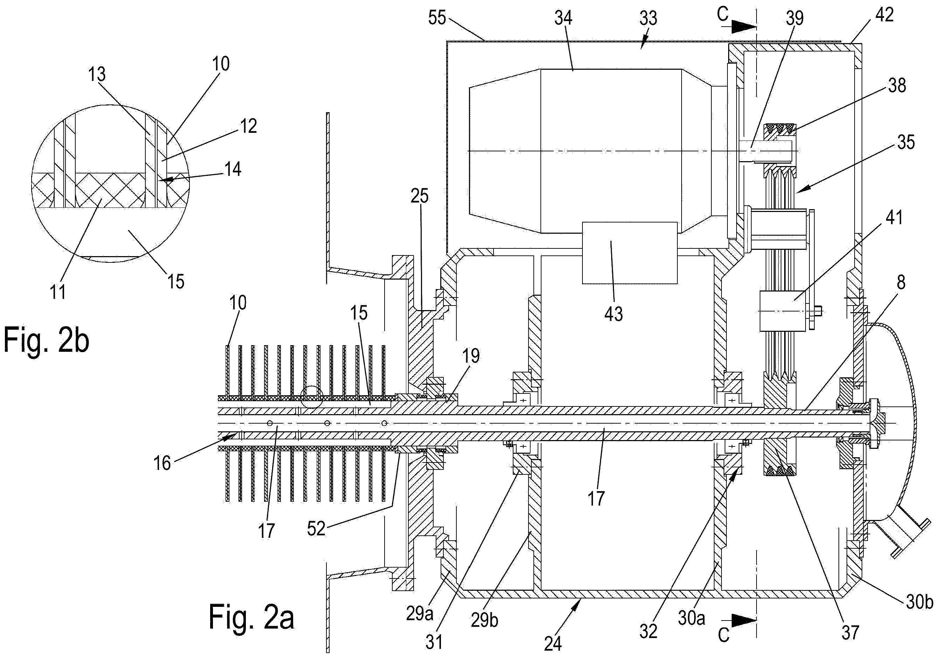

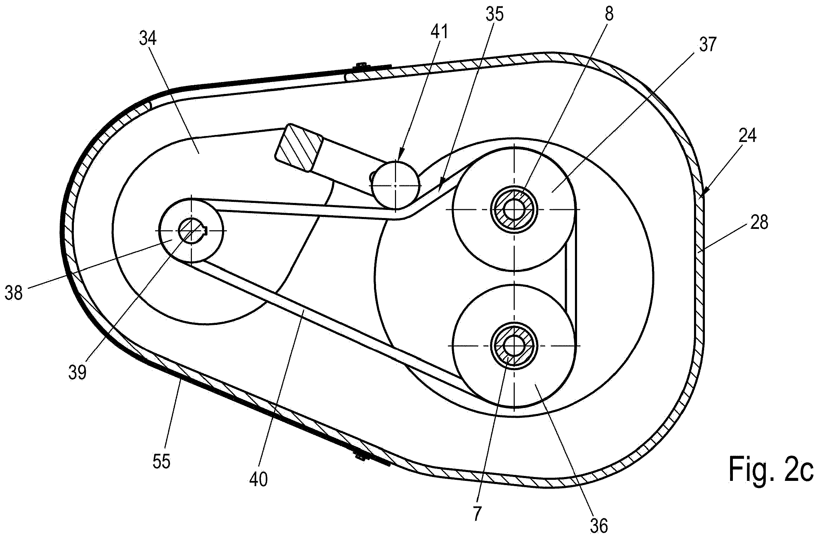

Die Fig. 1 und 2 zeigen verschiedene Schnittansichten einer Filtrieranordnung 1 für eine (hier nur abschnittsweise abgebildete) Filtriervorrichtung 2. Diese Filtriervorrichtung 2 ist in der Regel ein Teil einer hier nicht dargestellten, übergeordneten Fabrikationsanlage zur Herstellung eines Produktes.

Die Filtriervorrichtung 2 weist einen - hier nur abschnittsweise dargestellten - Behälter 3 zur Aufnahme einer oder mehrerer der Filtrieranordnungen 1 und einer zu filtrierenden Suspension auf. Der Behälter 3 ist mit wenigstens einem Zulauf und wenigstens einem Ablauf versehen (die hier nicht dargestellt sind). Er weist ferner wenigstens eine Öffnung 4 auf. Diese Öffnung 4 ist mit einem Flansch 5 versehen. An diesen Flansch 5 ist ein korrespondierend ausgebildeter Montageflansch 6 einer der Filtrieranordnungen 1 montierbar. Vorzugsweise erfolgt diese Montage mittels Schrauben, welche den Flansch durchsetzen (hier nicht dargestellt). Vorzugsweise weist jeder Behälter 1 nur eine einzige Öffnung 4 auf und es ist an jedem Behälter 3 nur eine einzige der Filtrationseinrichtungen 1 montiert. Es ist aber auch denkbar, an einem Behälter 3 mehrere der Öffnungen 4 vorzusehen und mehrere der Filtrieranordnungen 1 zu montieren.

Im Sinne dieser Beschreibung bilden wenigstens eine Filtrieranordnung 1 oder mehrere der Filtrieranordnungen 1 und wenigstens einer der Behälter 3 gemeinsam eine bzw. die Filtriervorrichtung 2.

Die wenigstens eine (hier nicht dargestellte) Zuleitung dient zur Zuleitung einer zu filtrierenden fließfähigen Suspension in den Behälter 3. Entweder dieselbe Zuleitung oder eine weitere Zuleitung ermöglicht dagegen das Einleiten einer Reinigungsflüssigkeit zur Durchführung einer Reinigung, insbesondere einer CIP-Reinigung, in den Prozesstank 1. Eine optionale weitere Zuleitung ermöglicht es, den Prozesstank 1 mit Luft oder Gas, insbesondere Inertgas, ggf. unter Druck, zu beaufschlagen (hier jeweils nicht dargestellt).

Die Filtrieranordnung 1 ist als Membran-Filtrieranordnung ausgebildet. Sie weist wenigstens zwei oder mehr drehbare Hohlwellen 7, 8 auf. Eine Anordnung mit zwei der Hohlwellen 7, 8 wird bevorzugt, da sie kompakt baut aber dennoch sehr gut arbeitet.

Nach Fig. 1 und 2 sind die Drehachsen D1 und D2 der Hohlwellen 7, 8 jeweils horizontal ausgerichtet. Diese Ausrichtung wird bevorzugt, da sie eine einfache Montage der Filtriereinrichtung an bzw. in den Behälter sicherstellt. Es ist aber auch eine andere Orientierung der Hohlwellen 7, 8 im Raum denkbar, insbesondere eine schräge Ausrichtung oder eine vertikale Ausrichtung (hier nicht dargestellt).

Auf den Hohlwellen 7, 8 sind jeweils mehrere oder viele Membranfilterscheiben 9, 10 angeordnet. Diese sind axial zueinander beabstandet auf den Hohlwellen 7, 8 angeordnet. Zwischen den Membranfilterscheiben 9, 10 sind Distanzhülsen 11 angeordnet, welche die Membranfilterscheiben 9, 10 auf den Hohlwellen 7, 8 axial zueinander beabstanden (siehe insbesondere Fig. 1b und 2b).

Die Hohlwellen 7, 8 sind vorzugsweise parallel zueinander ausgerichtet. Sie sind derart beabstandet und die Membranfilterscheiben 9, 10 sind so axial auf ihnen angeordnet, dass sich die Membranfilterscheiben 9, 10 auf den beiden Hohlwellen 7, 8 radial überlappen. D.h., die Membranfilterscheiben 9, 10 auf den beiden Hohlwellen 7, 8 greifen wechselweise überlappend ineinander, wobei sie sich nicht berühren. Derart wird im Betrieb bei Drehungen der Hohlwellen 7, 8 eine vorteilhafte Strömung in der Suspension im Behälter 3 erzeugt, welche die Filtration begünstigt.

Die Membranfilterscheiben 9, 10 bestehen bevorzugt aus einer Keramik. Sie weisen ferner bevorzugt einen zweischichtigen Aufbau (siehe Fig. 1b und 2b) auf, wobei zwischen den beiden oberen und unteren Keramikschichten 12, 13 sich radial erstreckende Permeatkanäle 14 und/oder ein vorzugsweise umfanggeschlossener Ringspalt ausgebildet ist. Radial nach außen hin werden dieser Permeatkanäle 14 oder der Ringspalt von den Keramikschichten 12, 13 abgeschlossen, die zumindest radial weiter außen miteinander verbunden sind. Bei der Filtration durchdringt die filtrierte Flüssigkeit - das Permeat- die Keramikschichten und wird durch die Permeatkanäle und/oder den Ringspalt abgeleitet. Im Behälter 3 verbleibt das unfiltrierte Retentat. Abgezogenes Flüssigkeitsvolumen kann je nach Anwendung ggf. für einen gewissen Zeitraum im Behälter 3 durch Zugabe von Suspension oder ggf. einer anderen Flüssigkeit auch wieder aufgefüllt werden, oder das geringer werdende Flüssigkeitsvolumen im Behälter 3 kann mit einem geeigneten Gas überlagert werden.

Radial nach innen sind die Permeatkanäle 14 und/oder ein entsprechender Ringspalt offen ausgebildet. Die Permeatkanäle 14 und/oder der Ringspalt bzw. die Ringspalte münden nach innen zu den Hohlwellen 7 bzw. 8 hin in jeweils mindestens einen axial verlaufenden Axialkanal 15 am Außenumfang der jeweiligen Hohlwellen 7, 8. Die Axialkanäle 15 erstreckt sich vorzugsweise jeweils über den größten Teil des axialen Abschnittes der Hohlwellen 7, 8, der innerhalb des Behälters 3 liegt.

Die Axialkanäle 15 sind jeweils mit einer oder mehreren axial beabstandeten, sich radial erstreckenden Bohrungen 16 versehen, die in einen Längskanal 17 innerhalb der jeweiligen Hohlwellen 7, 8 münden. Die Hohlwellen 7, 8 dienen selbst als Ableitungskanäle für das Permeat. Der Längskanal 17 erstreckt sich jeweils vorzugsweise über die gesamte Länge der Hohlwellen 7, 8 und liegt somit abschnittsweise innerhalb des Behälters 3 und abschnittsweise außerhalb des Behälters 3. Die Hohlwellen 7, 8 und der in ihnen axial verlaufende Längskanal 17 durchsetzen derart die Öffnung 4 des Behälters 3.

Die Hohlwellen 7, 8 weisen zur Öffnung 4 des Behälters 3 eine Durchmesservergrößerung oder einen Hülsenaufsatz 19 auf und verschließen in dieser Richtung axial die Axialkanäle 15. An den von der Öffnung abgewandten freien Enden der Hohlwellen 7, 8 im Behälter 3 ist jeweils eine Abdeckungseinrichtung 18 vorgesehen. Diese Abdeckungseinrichtung 18 verschließt in dieser Richtung den oder die Axialkanäle 15. Die Abdeckungseinrichtung 18 kann als Schraubabdeckung ausgebildet sein und auf einen Gewindeabschnitt an der jeweiligen Hohlwelle 7, 8 aufgeschraubt sein.

Die Distanzringe 11 bestehen vorzugsweise aus einem elastischen Material. Die Elastizität dieses Materials soll nicht zu groß sein, so dass insofern auch von einem zähelastischen Material gesprochen werden kann.

Zur Öffnung 4 hin sind die Membranfilterscheiben 9, 10 und die Distanzhülsen 11 an dem radial vorstehenden Hülsenaufsatz 19 auf den Hohlwellen 7, 8 abgestützt. Von der anderen Seite her drücken die Abdeckungseinrichtungen 18 als Abdeckung und Spanneinrichtungen axial auf die Anordnungen aus axial gestapelten Membranfilterscheiben 9 bzw. 10 und den Distanzhülsen 11.

Um die Anordnungen aus axial gestapelten Membranfilterscheiben 9 bzw. 10 und den Distanzhülsen 11 auf der oder den jeweiligen Hohlwellen zu zentrieren, bilden die Hohlwellen einen eckigen Außenquerschnitt aus.

Die Hohlwellen sind dann jeweils über die axiale Länge, auf welchen auf ihnen die Anordnungen aus axial gestapelten Membranfilterscheiben 9 bzw. 10 und den Distanzhülsen 11 angeordnet sind, an ihrem Außenumfang im Querschnitt in diesem Abschnitt je nach Anzahl der Axialkanäle regelmäßig mehreckig. Nach Fig. 2b sind die Hohlwellen 7, 8 jedenfalls über die axiale Länge, auf welchen auf ihnen die Anordnungen aus axial gestapelten Membranfilterscheiben 9 bzw. 10 und den Distanzhülsen 11 angeordnet sind, im Querschnitt achteckig.

Dabei ist der Außenradius durch die Ecken der Hohlwellen derart gewählt, dass die Distanzhülsen 11 und die Membranfilterscheibe 9, 10, die an ihrem Innenumfang kreisrund sind, einen Innenumfang aufweisen, der es erlaubt, sie bei der Montage zunächst mit Spielpassung auf den Ecken zu montieren, so dass nahezu linienförmige Anlagebereiche 20 im Bereich der Ecken zwischen dem Außenumfang der Hohlwellen 7, 8 und dem Innenumfang der Distanzhülsen 11 und der Membranfilterscheiben 9, 10 ausgebildet werden, wobei zwischen benachbarten linienförmigen Anlagebereichen 20 die Axialkanäle 15 entstehen (siehe Fig. 1c).

Die Abdeckeinrichtungen 18 weisen vorzugsweise einen Stopfen 21 (Siehe Fig. 1b) auf, mit dem der jeweilige Längskanal 17 in den Hohlwellen 7, 8 axial verschlossen wird. Die Abdeckeinrichtungen 18 weisen ferner eine Abdeckkappe 22 auf, die das jeweilige Ende der Hohlwellen 7, 8 und den Stopfen 21 übergreift. Diese Abdeckkappen 22 sind vorzugsweise als Schraubkappen ausgebildet, die auf einen Gewindeabschnitt am Ende der Hohlwellen 7, 8 im Behälter 3 aufschraubbar sind. Sie können axial direkt oder über eine Feder 23, beispielsweise eine Art Federring - insbesondere eine oder mehrere Tellerfedern - auf die jeweilige Anordnung aus axial gestapelten Membranfilterscheiben 9 bzw. 10 und den Distanzhülsen 11 wirken.

Derart kann vorteilhaft einstellbar eine Vorspannung parallel zu den Drehachsen D1, D2 aufgebaut werden. Dies dient dazu, eine definierte Vorspannung bzw. Vorspannkraft auf die jeweilige Anordnung aus axial gestapelten Membranfilterscheiben 9 bzw. 10 und den Distanzhülsen 11 aufzubauen/aufzubringen, die an der anderen Seite an dem Bund oder dem Hülsenaufsatz 19 als Durchmesservergrößerung auf der Hohlwelle 7, 8 abgestützt sind.

Die Vorspannkraft wird derart gewählt, dass sich die Distanzhülsen 11 so insbesondere vorzugsweise elastisch verformen, dass ihr Innenumfang im Bereich der Ecken bzw. der größten Außendurchmesser an den Außenumfang der nicht kreisrunden Hohlwellen 7, 8 gedrückt wird. Derart wird die gesamte Anordnung aus axial gestapelten Membranfilterscheiben 9 bzw. 10 und den Distanzhülsen 11 auf einfache aber dennoch sichere Weise drehsicher auf den Hohlwellen 7, 8 festgespannt.

Vorzugsweise sind zwei oder mehr, insbesondere zwei bis zehn der vorstehend beschriebenen Hohlwellen pro Filtriervorrichtung 2 vorgesehen. Die vorstehende Erläuterung des Aufbaus der Hohlwellen 7, 8 bezieht sich daher bevorzugt auf zwei oder mehr der Hohlwellen 7, 8, wobei sich vorzugsweise jeweils zwei der Hohlwellen bzw. präziser der darauf angeordneten Membranfilterscheiben 9, 10 radial überdecken.

Die Hohlwellen 7, 8 sind außerhalb der Behälters 3 drehbar in einem Maschinengehäuse 24 gelagert. Dies wird nachfolgend näher erläutert.

Das Maschinengehäuse 24 ist hier in bevorzugter Ausgestaltung als Metallgußteil ausgebildet. Diese Art der Ausgestaltung ist einfach realisierbar, aber dennoch stabil und kostengünstig.

Das Maschinengehäuse 24 weist hier (siehe Fig.2 c) im Querschnitt beispielhaft eine etwa dreieckige Geometrie auf und ist derart stabil ausgelegt.

Das Maschinengehäuse 24 ist direkt oder über eine Flanschplatte 25 mit dem Flansch 6 und mit einer oder mehreren Durchführung(en) 26 für die Hohlwellen 7, 8 an den Behälter 3 angeflanscht. Dabei können am Außenumfang der Hohlwellen 7, 8 eine oder mehrere ein- oder mehrteilige Dichtungsanordnungen 27 z.B. an der Durchmesservergrößerung ausgebildet sein, um jeweils eine abgedichtete Drehdurchführung an der Öffnung 4, insbesondere an der Flanschplatte 25, für die jeweiligen Hohlwellen 7, 8 auszubilden.

Das Maschinengehäuse 24 weist vorzugsweise einen Außenmantel 28 auf und einen oder mehrere Radialbünde 29a, b und 30a, b (jeder Radialbund weist hier eine innere vorzugsweise kreisrunde Durchführung für die Hohlwellen auf), die sich vom Außenmantel 28 radial nach innen erstrecken.

Vorzugsweise dienen einer oder zwei dieser Radialbünde 29b, 30a dazu, die Hohlwellen 7, 8 jeweils mit Lagereinrichtungen 31, 32, insbesondere mit zwei axial beabstandeten Wälzlagern, drehbar im Maschinengehäuse 24 zu lagern (Fig. 1a).

Jede der Hohlwellen 7, 8 ist von einer Antriebsvorrichtung 33 drehbar (siehe Fig. 1a, 2a und 2c). Dies wird weiter unten noch näher beschrieben. Bevorzugt wird eine Antriebsvorrichtung mit einem - insbesondere elektrischen - Antriebsmotor 34 und vorzugsweise einem Umschlingungstrieb, insbesondere einem Riementrieb 35 als Antriebsverbindung zu den Hohlwellen 7, 8 realisiert.

Der Riementrieb 35 bzw. dessen Antriebsriemen 40, insbesondere Keilriemen, umschlingt Riemenscheiben 36, 37, 38 auf den Hohlwellen 7, 8 und auf einer Antriebswelle 39 des Antriebsmotors 34 (siehe Fig. 2c). Die Riemenscheiben 36, 37 können außerhalb des Behälters 3 an sich an einer beliebigen axialen Stelle auf den Hohlwellen 7, 8 angeordnet werden. Hier sind sie bezogen auf den Behälter 3 axial auf der von den Lagereinrichtungen 31, 32 abgewandten Seite der Hohlwellen 7, 8 angeordnet, könnte aber auch zwischen den Lagereinrichtungen 31, 32 angeordnet sein.

Eine Spanneinrichtung 41 kann spannend bzw. federnd auf den Riementrieb 35 bzw. den eigentlichen Riemen 40 wirken.

Der Antriebsmotor 34 ist vorzugsweise an einem Abschnitt 42 des Maschinengehäuses 24 angebracht, der seitlich der Hohlwellen 7, 8 liegt. Der Antriebsmotor 34 kann in diesem Bereich mit einer Haube 55 abgedeckt sein oder abschnittsweise freiliegen. Ein optionaler Anschlusskasten 43 enthält elektrische Anschlüsse für den Antriebsmotor 34.

Es ist vorteilhaft, wenn das Maschinengehäuse 24 zumindest den Antriebsmotor 34, die Antriebsverbindung zu den Hohlwellen 7, 8 und die Lagereinrichtungen 31, 32 für die Hohlwellen aufnimmt bzw. jedenfalls im Wesentlichen einfassend mit dem Außenmantel 28 umgibt, so dass diese Komponenten gut geschützt liegen.

An dem außerhalb des Behälters 3 liegenden Enden der Hohlwellen 7, 8 ist eine Ableitungseinrichtung mit einer Zentrifugalpumpe ausgebildet (siehe insbesondere Fig.1a und 1d). Diese Ableitungseinrichtung besteht auf jeder Hohlwelle vorzugsweise aus jeweils mindestens einer Pumpscheibe 44, 45, die jeweils vorzugsweise auf die - axialen Enden der - Hohlwellen 7, 8 aufgesetzt sind und die wenigstens einen oder zwei oder mehr in radialer Ebene winklig schräg zur jeweiligen Radialrichtung von den axialen Längskanälen 17 nach außen verlaufenden Querkanal 46, 47 aufweisen.

Derart bilden die Pumpscheiben 44, 45 Pumpenradanordnungen, mit denen Permeat gepumpt wird. Im Betrieb wird bezogen auf Fig. 1d eine Drehung der Hohlwellen im Uhrzeigersinn realisiert. Die Pumpscheiben 44, 45 sind innerhalb eines Ableitungsraumes 48 angeordnet. Dieser Ableitungsraum 48 wird hier aus einem Ableitungsbehälter 49 mit wenigstens einer Ableitung 50 gebildet, der an das Maschinengehäuse 24 angesetzt ist. In dem Ableitungsraum als Abpumpraum 48 sind die Pumpscheiben 44, 45 angeordnet.. Er wird hier vorzugsweise ferner von Scheiben 51, 52, an denen die Hohlwellen 7, 8 drehdurchführungsartig und vorzugsweise mit Gleitringdichtungen abgedichtet aus dem Maschinengehäuse 24 geführt sind. Der Ableitungsbehälter 49 ist vorzugsweise wannenartig ausgebildet und mit seiner offenen Seite an dem Maschinengehäuse 24 montiert, insbesondere an dieses angeflanscht.

Die Ableitung 50 kann je nach Wunsch an verschiedenen Stellen des Ableitungsbehälters 49 ausgebildet sein, so nach einer Variante an der in Einbaustellung am Behälter tiefsten Stelle oder an einer so hohen Stelle, dass die vorstehend erwähnten Gleitringdichtungen im Betrieb nicht trocken werden.

Im Ableitungsraum 48, insbesondere im Ableitungsbehälter 49, können eine oder mehrere Rippen 53, 54 vorgesehen sein, die verhindern sollen, dass sich die Pumpscheiben 44, 45 nachteilig strömungstechnisch beeinflussen.

Im Betrieb wird der Behälter 3 mit einer fließfähigen Suspension befüllt. Sodann werden die Hohlwellen 7, 8 in Drehung versetzt. Derart wird Flüssigkeit durch die Keramikschichten 12, 13 in die Permeatkanäle 14 gesaugt, fließt von dort in die Axialkanäle 15 und die Bohrungen 16 in die beiden Längskanäle 17 und von dort durch die Pumpenscheiben 44, 45 mit den Querkanälen 46, 47 in den Ableitungsraum 48, aus dem das Permeat durch die Ableitung 50 abfließt.

Anzumerken ist, dass sich zum Erreichen guter Filtrationsergebnisse folgende Bereiche insbesondere bewährt haben:
- die Membranfilterscheiben 9, 10 weisen vorzugsweise einen Durchmesser von 50 - 500 mm auf, besonders bevorzugt einen Durchmesser von 200 bis 400 mm;
- die Umfangsdrehgeschwindigkeit im Betrieb beträgt am Außenumfang der Membranfilterscheiben 9, 10 bevorzugt 5 bis 50 m/sec; und/oder
- die Anzahl an Hohlwellen pro Filtrieranordnung beträgt vorzugsweise zwei bis zehn;
- die Anzahl an Membranfilterscheiben 9, 10 je Hohlwelle beträgt vorzugsweise 10 bis 250 Stück, insbesondere 40 bis 150 Stück.

**Bezugszeichen**

| | |
|---|---|
| Filtrieranordnung | 1 |
| Filtriervorrichtung | 2 |
| Behälter | 3 |
| Öffnung | 4 |
| Flansch | 5 |
| Montageflansch | 6 |
| Hohlwellen | 7, 8 |
| Membranfilterscheiben | 9, 10 |
| Distanzhülsen | 11 |
| Keramikschichten | 12, 13 |
| Permeatkanäle | 14 |
| Axialkanal | 15 |
| Bohrungen | 16 |
| Längskanal | 17 |
| Abdeckeinrichtungen | 18 |
| Bund | 19 |
| Anlagebereiche | 20 |
| Stopfen | 21 |
| Abdeckkappen | 22 |
| Feder | 23 |
| Maschinengehäuse | 24 |
| Flanschplatte | 25 |
| Durchführung | 26 |
| Dichtungsanordnungen | 27 |
| Außenmantel | 28 |
| Radialbunde | 29, 30 |
| Lagereinrichtungen | 31, 32 |
| Antriebsvorrichtung | 33 |
| Antriebsmotor | 34 |
| Riementrieb | 35 |
| Riemenscheiben | 36, 37, 38 |
| Antriebswelle | 39 |
| Antriebsriemen | 40 |
| Spanneinrichtung | 41 |
| Abschnitt | 42 |
| Anschlusskasten | 43 |
| Pumpscheiben | 44, 45 |
| Querkanal | 46, 47 |
| Ableitungsraum | 48 |
| Ableitungsbehälter | 49 |
| Ableitung | 50 |
| Scheiben | 51, 52 |
| Rippen | 53, 54 |
| Haube | 55 |
| Drehachsen | D1, D2 |

## Patentansprüche

1. Filtrieranordnung für eine Filtriervorrichtung, wobei die Filtriervorrichtung einen Behälter (3) aufweist und wobei die Filtrieranordnung folgendes aufweist:
a. wenigstens zwei oder mehre in einem Maschinengestell drehbar gelagerte Hohlwellen (7, 8),
b. auf denen eine Mehrzahl von Membranfilterscheiben (9, 10) angeordnet sind,
c. wobei den mehreren Hohlwellen (7, 8) wenigstens eine Antriebsvorrichtung zugeordnet ist,
d. wobei die Ableitung von Permeat aus dem Behälter (3) durch die Hohlwellen (7, 8) realisierbar ist, und
e. wobei jede Hohlwelle (7, 8) an einem ihrer Enden mit der Mehrzahl von Membranfilterscheiben (9, 10) in den Behälter (3) einsetzbar ist, so dass sie an ihrem entgegengesetzten Ende aus dem Behälter (3) nach außen vorstehen,
f. wobei auf jeder Hohlwelle (7, 8) jeweils mehrere oder viele der Membranfilterscheiben (9, 10) axial beabstandet angeordnet sind, und das zwischen einem Teil oder sämtlichen benachbarten Membranfilterscheiben (9, 10) verformbare Distanzhülsen (11) angeordnet sind, welche die Membranfilterscheiben (9, 10) auf den Hohlwellen (7, 8) axial zueinander beabstanden,
g. wobei eine Vorspannung derart gewählt ist, dass sich die Distanzhülsen (11) so verformen, dass ihr Innenumfang im Bereich der Ecken bzw. der größten Außendurchmesser an den Außenumfang der nicht kreisrunden Hohlwellen (7, 8) gedrückt wird, so dass die Anordnung aus axial gestapelten Membranfilterscheiben (9 bzw. 10) drehsicher auf den Hohlwellen (7, 8) festgespannt ist,
**dadurch gekennzeichnet, dass**.
h. die Hohlwellen (7, 8) einen mehreckigen Außenquerschnitt ausbilden, wobei jeweils über die axiale Länge, auf welcher die Anordnungen aus axial gestapelten Membranfilterscheiben (9 bzw. 10) und den Distanzhülsen (11) angeordnet sind, die Hohlwellen (7, 8) außen regelmäßig mehreckig ausgebildet sind,
i. wobei die Distanzhülsen (11) und die Membranfilterscheiben innen kreisrund sind und wobei nahezu linienförmige Anlagebereiche (20) im Bereich der Ecken zwischen dem Außenumfang der Hohlwellen (7, 8) und dem Innenumfang der Distanzhülsen (11) und der Membranfilterscheiben (9, 10) ausgebildet sind, wobei zwischen benachbarten Anlagebereichen die Axialkanäle verlaufen.

2. Filtrieranordnung nach Anspruch 1, **dadurch gekennzeichnet, dass** die Distanzhülsen (11) aus einem elastisch verformbaren Material bestehen.

3. Filtrieranordnung nach einem oder mehreren der vorstehenden Ansprüche, **dadurch gekennzeichnet, dass** die Hohlwellen (7, 8) parallel zueinander ausgerichtet sind und dass sie derart beabstandet sind und dass die Membranfilterscheiben (9, 10) so axial auf ihnen angeordnet sind, dass sich die Membranfilterscheiben (9, 10) auf den Hohlwellen (7, 8) radial überlappen.

4. Filtrieranordnung nach einem oder mehreren der vorstehenden Ansprüche, **dadurch gekennzeichnet, dass** jede Membranfilterscheibe (9, 10) sich radial erstreckende Permeatkanäle (14) und/oder einen Ringspalt aufweist, der/die radial nach innen offen ausgebildet sind und dass die Permeatkanäle (14) und/oder der Ringspalt bzw. die Ringspalte nach innen zu den Hohlwellen (7 bzw. 8) hin in jeweils mindestens einen axial verlaufenden Axialkanal (15) am Außenumfang der jeweiligen Hohlwellen (7, 8) münden.

5. Filtrieranordnung nach einem oder mehreren der vorstehenden Ansprüche, **dadurch gekennzeichnet, dass** sich die Axialkanäle (15) jeweils über den größten Teil des axialen Abschnittes der Hohlwellen (7, 8) erstrecken, der innerhalb des Behälters (3) anordbar ist.

6. Filtrieranordnung nach einem oder mehreren der vorstehenden Ansprüche, **dadurch gekennzeichnet, dass** die Hohlwellen (7, 8) jeweils mit einer oder mehreren axial beabstandeten, sich radial erstreckenden Bohrungen (16) versehen sind, die von den Axialkanälen (15) ausgehend in einen Längskanal (17) innerhalb der jeweiligen Hohlwellen (7, 8) münden, wobei sich der Längskanal (17) jeweils vorzugsweise über die gesamte Länge der Hohlwellen (7, 8) erstreckt und abschnittsweise innerhalb des Behälters (3) und abschnittsweise außerhalb des Behälters (3) anordbar ist.

7. Filtrieranordnung nach einem oder mehreren der vorstehenden Ansprüche, **dadurch gekennzeichnet, dass** die Hohlwellen (7, 8) eine Durchmesservergrößerung, insbesondere einen Bund oder einen Hülsenaufsatz (19) aufweisen und derart in einer ersten Richtung axial die Axialkanäle (15) verschließen.

8. Filtrieranordnung nach einem oder mehreren der vorstehenden Ansprüche, **dadurch gekennzeichnet, dass** der Abstand gegenüberliegender nichtrunder Bereiche, insbesondere Ecken, der Hohlwellen (7, 8) und der Innenradius der Distanzhülsen (11) derart gewählt und abgestimmt ist, dass die Distanzhülsen (11) bei der Montage zunächst mit Spielpassung auf die Hohlwellen (7, 8) aufsetzbar sind und dass nach der Montage durch Aufbringen einer Vorspannkraft - der Vorspannung - die nahezu linienförmige Anlagebereiche (20) entstehen, wobei zwischen benachbarten Anlagebereichen die Axialkanäle verlaufen.

9. Filtrieranordnung nach einem oder mehreren der vorstehenden Ansprüche, **dadurch gekennzeichnet, dass** die Abdeckeinrichtungen (18) axial über eine Feder (23) - insbesondere eine oder mehrere Tellerfedern - auf die jeweilige Anordnung aus axial gestapelten Membranfilterscheiben (9 bzw. 10) und den Distanzhülsen (11) mit einer Vorspannkraft wirken, wobei vorzugsweise die Abdeckeinrichtungen (18) über einer auf die Hohlwellen (7, 8) aufgeschraubte Abdeckkappe (22) und von dieser axial über die Feder (23) auf die jeweilige Anordnung aus axial gestapelten Membranfilterscheiben (9 bzw. 10) und den Distanzhülsen (11) mit der Vorspannkraft wirken.

10. Filtrieranordnung nach einem oder mehreren der vorstehenden Ansprüche, **dadurch gekennzeichnet, dass** an dem entgegengesetzten Ende jeder drehbaren Hohlwelle (7, 8) eine drehbare Pumpscheibe (44, 45) angeordnet oder ausgebildet ist, die einen Teil einer Zentrifugalpumpenanordnung zum Pumpen von Permeat bildet wobei vorzugsweise an jeweils außerhalb des Behälters (3) anordbaren Enden der Hohlwellen (7, 8) wenigstens zwei der Pumpscheiben (44, 45) oder sämtliche der Pumpscheiben (44, 45) in einem gemeinsamen Ableitungsbehälter (49) angeordnet sind.

11. Filtrieranordnung nach einem oder mehreren der vorstehenden Ansprüche, **dadurch gekennzeichnet, dass** der Ableitungsbehälter (49) eine Ableitung (50) aufweist und ansonsten abgedichtet ausgebildet und an das Maschinengestell angesetzt ist.

12. Filtrieranordnung nach einem oder mehreren der vorstehenden Ansprüche 12 oder 13, **dadurch gekennzeichnet, dass** jede Pumpscheibe (44, 45) einen oder mehrere senkrecht zu einem Ableitungskanal (17) in den jeweiligen Hohlwellen (7, 8) schräg zu einer Radialrichtung verlaufenden Ableitungskanal (46, 47) aufweist.

13. Filtrieranordnung nach einem oder mehreren der vorstehenden Ansprüche, **dadurch gekennzeichnet, dass** der Ableitungsbehälter (49) wannenartig ausgebildet ist und/oder eine oder mehrere innere Rippen (53, 54) aufweist.

14. Filtrieranordnung nach einem oder mehreren der vorstehenden Ansprüche, **dadurch gekennzeichnet, dass** die Hohlwellen (7, 8) außerhalb des Behälters (3) drehbar in einem Maschinengehäuse (24) als das Maschinengestell gelagert sind.

15. Filtrieranordnung nach einem oder mehreren der vorstehenden Ansprüche, **dadurch gekennzeichnet, dass** das Maschinengehäuse (24) als Metallgußteil ausgebildet ist.

16. Filtriervorrichtung, **gekennzeichnet durch** eine oder mehrere Filtrieranordnungen nach einem der vorstehenden Ansprüche und einen Behälter (3).

## Claims

1. A filtration arrangement for a filtration device, wherein the filtration device has a container (3), and wherein the filtration arrangement has the following:
a. at least two or more hollow shafts (7, 8) which are rotatably mounted in a machine frame;
b. a plurality of membrane filter disks (9, 10) being disposed on said hollow shafts (7, 8);
c. wherein the plurality of hollow shafts (7, 8) are assigned at least one drive device;
d. wherein the discharge of permeate from the container (3) is implementable by way of the hollow shaft (7, 8); and
e. wherein each hollow shaft (7, 8) at one of the ends thereof by way of the plurality of membrane filter disks (9, 10) is introducible into the container (3) such that said hollow shafts (7, 8) at the opposite end thereof project externally from the container (3);
f. wherein in each case a plurality or many of the membrane filter disks (9, 10) are disposed so as to be axially spaced apart on each hollow shaft (7, 8), and the deformable spacer sleeves (11) which axially mutually space apart the membrane filter disks (9, 10) on the hollow shafts (7, 8) are disposed between part of or all of the neighboring membrane filter disks (9, 10),
g. wherein a pretension is chosen such that the spacer sleeves (11) deform such that the internal circumference of the latter in the region of the corners, or of the largest external diameter, respectively, is pushed onto the external circumference of the non-circular hollow shafts (7, 8) such that the arrangement from axially stacked membrane filter disks (9 or 10, respectively) is tightly clamped in a rotationally secured manner on the hollow shafts (7, 8),
**characterized in that**
h. the hollow shafts (7, 8) form a polygonal external cross section, wherein the hollow shafts (7, 8) are in each case externally configured so as to be typically polygonal across the axial length on which the arrangements from axially stacked membrane filter disks (9, or 10, respectively) and from the spacer sleeves (11) are disposed,
i. wherein the spacer sleeves (11) and the membrane filter disks are circular-shaped inside and wherein almost linear bearing regions (20) are configured in the region of the corners between the external circumference of the hollow shafts (7, 8) and the internal circumference of the spacer sleeves (11) and of the membrane filter disks (9, 10), wherein the axial ducts are created between neighboring linear bearing regions.

2. The filtration arrangement as claimed in claim 1, **characterized in that** the spacer sleeves (11) are composed of an elastically deformable material.

3. The filtration arrangement as claimed in one or a plurality of the preceding claims, **characterized in that** the hollow shafts (7, 8) are aligned so as to be mutually parallel, and **in that** said hollow shafts (7, 8) are spaced apart in such a manner, and **in that** the membrane filter disks (9, 10) are disposed axially on said hollow shafts (7, 8) such that the membrane filter disks (9, 10) overlap in a radial manner on the hollow shafts (7, 8).

4. The filtration arrangement as claimed in one or a plurality of the preceding claims, **characterized in that** each membrane filter disk (9, 10) has radially extending permeate ducts (14) and/or an annular gap, said permeate ducts (14) and/or annular gap being configured so as to be open in a radially inward manner, and **in that** the permeate ducts (14) and/or the annular gap, or the annular gaps, respectively in an inward manner toward the hollow shafts (7, 8, respectively) open into in each case at least one axially running axial duct (15) on the external circumference of the respective hollow shafts (7, 8).

5. The filtration arrangement as claimed in one or a plurality of the preceding claims, **characterized in that** the axial ducts (15) extend in each case across the major part of the axial portion of the hollow shafts (7, 8) which is disposable within the container (3).

6. The filtration arrangement as claimed in one or a plurality of the preceding claims, **characterized in that** the hollow shafts (7, 8) are in each case provided with one or a plurality of axially spaced apart, radially extending bores (16) which, proceeding from the axial ducts (15), open into a longitudinal duct (17) within the respective hollow shafts (7, 8), wherein
the longitudinal duct (17) extends in each case preferably across the entire length of the hollow shafts (7, 8) and in portions is disposable within the container (3) and in portions is disposable outside the container (3).

7. The filtration arrangement as claimed in one or a plurality of the preceding claims, **characterized in that** the hollow shafts (7, 8) have a diameter enlargement, in particular a collar or a sleeve attachment (19) and in such a manner axially close the axial ducts (15) in a first direction.

8. The filtration arrangement as claimed in one or a plurality of the preceding claims, **characterized in that** the spacing of opposite non-circular regions, in particular of corners, of the hollow shafts (7, 8) and the internal radius of the spacer sleeves (11) are chosen and adapted in such a manner that the spacer sleeves (11) in the assembly are initially capable of being placed onto the hollow shafts (7, 8) by way of a loose fit, and **in that** after the assembly the almost linear bearing regions (20) are created by applying a pretensioning force, the pretensioning, wherein the axial ducts run between neighboring bearing regions.

9. The filtration arrangement as claimed in one or a plurality of the preceding claims, **characterized in that** the covering installations (18) by way of a spring (23), in particular one or a plurality of disk springs, act axially with a pretensioning force on the respective arrangement from axially stacked membrane filter disks (9, or 10, respectively) and from the spacer sleeves (11), wherein preferably the covering installations (18) by way of a covering cap (22) that is screwed onto the hollow shafts (7, 8), and from said covering cap (22) by way of the spring (23) act axially with the pretensioning force on the respective arrangement from axially stacked membrane filter disks (9, or 10, respectively) and from the spacer sleeves (11).

10. The filtration arrangement as claimed in one or a plurality of the preceding claims, **characterized in that** a rotatable pump disk (44, 45) which forms part of a centrifugal pump arrangement for pumping permeate is disposed or configured at the opposite end of each rotatable hollow shaft (7, 8), wherein preferably at least two of the pump disks (44, 45), or all of the pump disks (44, 45), are disposed in a common discharge container (49) at ends of the hollow shafts (7, 8) that are in each case disposable outside the container (3).

11. The filtration arrangement as claimed in one or a plurality of the preceding claims, **characterized in that** the discharge container (49) has a discharge (50) and otherwise is configured so as to be sealed and attached to the machine frame.

12. The filtration arrangement as claimed in one or a plurality of the preceding claims 12 or 13, **characterized in that** each pump disk (44, 45) has one or a plurality of discharge ducts (46, 47) that run/runs perpendicularly to a discharge duct (17) in the respective hollow shafts (7, 8), in a manner oblique to a radial direction.

13. The filtration arrangement as claimed in one or a plurality of the preceding claims, **characterized in that** the discharge container (49) is configured in the manner of a tub, and/or has one or a plurality of internal ribs (53, 54).

14. The filtration arrangement as claimed in one or a plurality of the preceding claims, **characterized in that** the hollow shafts (7, 8) are rotatably mounted outside the container (3) in a machine housing (24) as the machine frame.

15. The filtration arrangement as claimed in one or a plurality of the preceding claims, **characterized in that** the machine housing (24) is configured as a metal casting.

16. A filtration device, **characterized by** one or a plurality of filtration arrangements as claimed in one of the preceding claims, and by a container (3).

## Revendications

1. Agencement de filtration pour un dispositif de filtration, le dispositif de filtration présentant un récipient (3) et l'agencement de filtration présentant les éléments suivants :
a. au moins deux ou plusieurs arbres creux (7, 8) montés rotatifs dans un bâti de machine,
b. sur lesquels une pluralité de disques filtrants à membrane (9, 10) sont disposés,
c. au moins un dispositif d'entraînement étant associé auxdits plusieurs arbres creux (7, 8),
d. la décharge de perméat du récipient (3) étant réalisable à travers les arbres creux (7, 8) et
e. chaque arbre creux (7, 8) pouvant, à l'une de ses extrémités, être inséré dans le récipient (3) avec la pluralité de disques filtrants à membrane (9, 10) de telle sorte qu'il dépasse du récipient (3) à son extrémité opposée,
f. plusieurs ou beaucoup des disques filtrants à membrane (9, 10) étant disposés axialement espacés les uns des autres sur chaque arbre creux (7, 8) et, entre une partie ou la totalité des disques filtrants à membrane (9, 10) adjacents, des douilles d'écartement déformables (11) étant disposées, lesquelles espacent axialement les disques filtrants à membrane (9, 10) les uns des autres sur les arbres creux (7, 8),
g. une précontrainte étant choisie de sorte que les douilles d'écartement (11) se déforment de telle façon que leur circonférence intérieure soit pressée contre la circonférence extérieure des arbres creux non circulaires (7, 8) dans la zone des coins ou du plus grand diamètre extérieur, de sorte que l'agencement de disques filtrants à membrane empilés axialement (9, respectivement 10) est serré de manière bloquée en rotation sur les arbres creux (7, 8),
**caractérisé en ce que**
h. les arbres creux (7, 8) présentent une section transversale extérieure polygonale, les arbres creux (7, 8) étant réalisés régulièrement polygonaux extérieurement sur la longueur axiale sur laquelle les disques filtrants à membrane empilés axialement (9, respectivement 10) et les douilles d'écartement (11) sont disposés,
i. les douilles d'écartement (11) et les disques filtrants à membrane étant circulaires intérieurement et des zones de contact pratiquement linéaires (20) étant formées dans la zone des coins entre la circonférence extérieure des arbres creux (7, 8) et la circonférence intérieure des douilles d'écartement (11) et des disques filtrants à membrane (9, 10), des canaux axiaux s'étendant entre des zones de contact adjacentes.

2. Agencement de filtration selon la revendication 1, **caractérisé en ce que** les douilles d'écartement (11) sont constituées d'un matériau élastiquement déformable.

3. Agencement de filtration selon l'une ou plusieurs des revendications précédentes, **caractérisé en ce que** les arbres creux (7, 8) sont alignés parallèlement l'un à l'autre et qu'ils sont espacés et que les disques filtrants à membrane (9, 10) sont disposés axialement sur eux de telle sorte que les disques filtrants à membrane (9, 10) se chevauchent radialement sur les arbres creux (7, 8).

4. Agencement de filtration selon l'une ou plusieurs des revendications précédentes, **caractérisé en ce que** chaque disque filtrant à membrane (9, 10) présente des canaux de perméat (14) s'étendant radialement et/ou un espace annulaire qui sont ouverts radialement vers l'intérieur et que les canaux de perméat (14) et/ou l'espace annulaire ou les espaces annulaires débouchent vers l'intérieur, en direction des arbres creux (7, respectivement 8), dans au moins un canal axial respectif (15) s'étendant axialement sur la périphérie extérieure des arbres creux respectifs (7, 8).

5. Agencement de filtration selon l'une ou plusieurs des revendications précédentes, **caractérisé en ce que** les canaux axiaux (15) s'étendent chacun sur la plus grande part de la partie axiale des arbres creux (7, 8) qui peut être disposée à l'intérieur du récipient (3).

6. Agencement de filtration selon l'une ou plusieurs des revendications précédentes, **caractérisé en ce que** les arbres creux (7, 8) sont pourvus chacun d'un ou plusieurs alésages (16) espacés axialement et s'étendant radialement qui, à partir des canaux axiaux (15), débouchent dans un canal longitudinal (17) à l'intérieur des arbres creux respectifs (7, 8), le canal longitudinal (17) étant disposé de préférence sur toute la longueur des arbres creux (7, 8) et pouvant être disposé en partie à l'intérieur du récipient (3) et en partie à l'extérieur du récipient (3).

7. Agencement de filtration selon l'une ou plusieurs des revendications précédentes, **caractérisé en ce que** les arbres creux (7, 8) présentent un agrandissement de diamètre, en particulier une collerette ou une douille rapportée (19), et ferment ainsi axialement les canaux axiaux (15) dans une première direction.

8. Agencement de filtration selon l'une ou plusieurs des revendications précédentes, **caractérisé en ce que** la distance entre des zones non circulaires opposées, en particulier des coins, des arbres creux (7, 8) et le rayon intérieur des douilles d'écartement (11) est choisie et adaptée de telle sorte que les douilles d'écartement (11) peuvent d'abord être montés avec jeu sur les arbres creux (7, 8) lors du montage et, qu'après le montage, les zones de contact pratiquement linéaires (20) sont produites en exerçant une force de précontrainte - la précontrainte -, les canaux axiaux s'étendant entre des zones de contact adjacentes.

9. Agencement de filtration selon l'une ou plusieurs des revendications précédentes, **caractérisé en ce que** les moyens de recouvrement (18) exercent axialement une force de précontrainte sur l'agencement respectif de disques filtrants à membrane empilés axialement (9, respectivement 10) et des douilles d'écartement (11) par l'intermédiaire d'un ressort (23), en particulier d'une ou plusieurs rondelles ressort, les moyens de recouvrement (18) exerçant de préférence la force de précontrainte sur l'agencement respectif de disques filtrants à membrane empilés axialement (9, respectivement 10) et des douilles d'écartement (11) par l'intermédiaire d'un capuchon de recouvrement (22) vissé sur les arbres creux (7, 8) et par celui-ci axialement par l'intermédiaire du ressort (23).

10. Agencement de filtration selon l'une ou plusieurs des revendications précédentes, **caractérisé en ce qu'**un disque de pompe rotatif (44, 45), qui fait partie d'un agencement de pompe centrifuge pour pomper le perméat, est disposé ou formé à l'extrémité opposée de chaque arbre creux rotatif (7, 8), au moins deux des disques de pompe (44, 45) ou tous les disques de pompe (44, 45) étant de préférence disposés dans un récipient de décharge commun (49) aux extrémités des arbres creux (7, 8) qui peuvent respectivement être disposées à l'extérieur du récipient (3)

11. Agencement de filtration selon l'une ou plusieurs des revendications précédentes, **caractérisé en ce que** le récipient de décharge (49) présente une conduite de décharge (50) et est par ailleurs de construction étanche et monté sur le bâti de machine.

12. Agencement de filtration selon l'une ou plusieurs des revendications 12 ou 13 précédentes, **caractérisé en ce que** chaque disque de pompe (44, 45) présente un ou plusieurs canaux de décharge (46, 47) s'étendant perpendiculairement à un canal de décharge (17) dans les arbres creux respectifs (7, 8) et obliquement par rapport à une direction radiale.

13. Agencement de filtration selon l'une ou plusieurs des revendications précédentes, **caractérisé en ce que** le récipient de décharge (49) est réalisé en forme de bac et/ou présente une ou plusieurs nervures intérieures (53, 54).

14. Agencement de filtration selon l'une ou plusieurs des revendications précédentes, **caractérisé en ce que** les arbres creux (7, 8) sont montés rotatifs à l'extérieur du récipient (3) dans un carter de machine (24) formant le bâti de machine.

15. Agencement de filtration selon l'une ou plusieurs des revendications précédentes, **caractérisé en ce que** le carter de machine (24) est réalisé sous la forme d'une pièce coulée en métal.

16. Dispositif de filtration, **caractérisé par** un ou plusieurs agencements de filtration selon l'une des revendications précédentes et un récipient (3).
